(19) Europäisches Patentamt
European Patent Office
Office européen des brevets

(11) **EP 4 060 126 B1**

(12) **EUROPEAN PATENT SPECIFICATION**

(45) Date of publication and mention
of the grant of the patent:
**11.02.2026 Bulletin 2026/07**

(21) Application number: **20887270.5**

(22) Date of filing: **12.11.2020**

(51) International Patent Classification (IPC):
*E02F 9/20* $^{(2006.01)}$    *F16H 61/16* $^{(2006.01)}$
*F16H 59/66* $^{(2006.01)}$    *F16H 59/44* $^{(2006.01)}$
*F16H 59/42* $^{(2006.01)}$    *F16H 59/40* $^{(2006.01)}$
*F16H 59/14* $^{(2006.01)}$

(52) Cooperative Patent Classification (CPC):
**E02F 9/2079; E02F 9/2289; E02F 9/2296;
F16H 59/14; F16H 61/0213; F16H 61/16;**
F16H 2059/663; F16H 2061/0234

(86) International application number:
**PCT/KR2020/015921**

(87) International publication number:
**WO 2021/096262 (20.05.2021 Gazette 2021/20)**

(54) **CONSTRUCTION MACHINERY PROVIDED WITH AUTOMATIC TRANSMISSION DEVICE AND TRANSMISSION CONTROL METHOD**

BAUMASCHINE MIT AUTOMATISCHEM GETRIEBE UND GETRIEBESTEUERUNGSVERFAHREN

MACHINERIE DE CONSTRUCTION DOTÉE D'UNE BOITE DE VITESSES AUTOMATIQUE ET PROCÉDÉ DE COMMANDE DE BOITE DE VITESSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2019 KR 20190145871**

(43) Date of publication of application:
**21.09.2022 Bulletin 2022/38**

(73) Proprietor: **HD Hyundai Infracore Co., Ltd.
Incheon 22502 (KR)**

(72) Inventor: **LEE, Hoyoung
Incheon 21553 (KR)**

(74) Representative: **Isarpatent
Patent- und Rechtsanwälte Barth
Charles Hassa Peckmann & Partner mbB
Friedrichstrasse 31
80801 München (DE)**

(56) References cited:
**EP-A1- 2 589 836**    **EP-A1- 3 640 404**
**WO-A1-2019/017740**    **DE-U1- 212016 000 040**
**JP-A- 2017 178 191**    **KR-A- 20160 086 043**
**KR-A- 20160 133 327**    **KR-A- 20170 091 937**
**KR-A- 20190 009 939**    **US-A1- 2016 153 175**
**US-A1- 2016 215 880**

## Description

[Technical Field]

The present invention relates to an automatic transmission apparatus of a construction machine, and more particularly, to a construction machine equipped with an automatic transmission apparatus, which is capable of automatically controlling a shift of a transmission of a construction machine, such as a wheel excavator, according to a situation requiring a shift, and a shift control method.

[Background Art]

In general, an excavator is a type of construction machine and includes a lower traveling body, a revolving body pivotably connected to the lower traveling body, a boom connected to the upper revolving body, an arm connected to the boom, and an attachment selectively connected to the arm. The attachment includes a bucket, a breaker, a crusher, and the like. The excavator may include a wheeled excavator driven by wheels. The wheel excavator runs by transmitting hydraulic pressure generated from a main pump to the wheels via a travel motor and a transmission.

According to related technologies, the transmission may be roughly classified into a manual transmission type, a semi-automatic transmission type, or an automatic transmission type. Among these transmissions, the manual transmission may be shifted from a low gear to a high gear or vice versa by a driver manually operating a shift switch according to the traveling speed of the wheel excavator. Such manual transmission may be performed only when the wheel excavator is stopped. That is, when the forward/reverse gear is in a neutral state and the wheel excavator is in a stopped state, the transmission is made by the operation of the shift switch by the operator. For this reason, since the user has to frequently stop the wheel excavator in order to shift the gear, the wheel excavator may have low fuel efficiency. In addition, frequent stopping of wheel excavators is emerging as a complaint of workers.

That is, since a general wheel excavator in the related art uses a mechanical driving motor and a manual shift type transmission, it is inconvenient to have to press the brake to completely stop the excavator in order to shift while driving. If the shifting is performed while driving, there occurs a problem in that a synchronizer is damaged due to damage to a sensor and the like.

Meanwhile, the semi-automatic transmission may be operated by a shift switch. Although the semi-automatic transmission does not require the wheel excavator to stop, there may be inconvenience in that the driver has to manually operate the shift switch depending on the traveling speed of the wheel excavator.

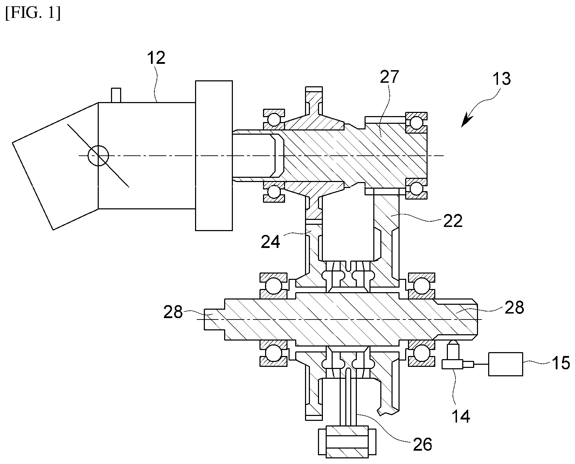

FIG. 1 is a cross-sectional view illustrating an automatic transmission apparatus of a construction machine to which an automatic shift method in the related art is applied.

As illustrated in FIG. 1, Korean Patent Application Laid-Open No. 10-2016-0086043, which was invented to solve the above-mentioned inconvenience, discloses an automatic transmission apparatus 13. The automatic transmission apparatus includes a sensor 14 for detecting a traveling speed, a transmission 13, and a controller 15. In detail, the transmission 13 includes a first-stage gear 22, a second-stage gear 24, and a synchronizer 26 installed on an output shaft 28, and the controller 15 synchronizes rotational speeds of an input shaft 27 and an output shaft 28 according to a traveling speed of a wheel excavator detected by the sensor 14.

That is, the rotation speed of the input shaft 27 and the rotation speed of the output shaft 28 are synchronized by the controller 15 by correcting the traveling power of the traveling motor 12, and a technique for implementing automatic shifting of the transmission 13 in the controller 15 by the synchronization is disclosed.

However, in the prior document, there is a problem in that shift shocks and noises are periodically generated because the construction machine starts with the first-stage gear regardless of the current working place or working position of the construction machine.

[Disclosure]

[Technical Problem]

Therefore, an object of the present invention to solve this problem is to provide a construction machine equipped with an automatic transmission apparatus capable of preventing damage to components of a construction machine related to shifting by performing shifting through shifting conditions optimized for situations in which there is a lot of shifts or situations in which shift shocks and noises are periodically incurred, and a shift control method.

[Technical Solution]

The present invention is set out by the appended claims. According to the invention, there are provided a construction machine in accordance with claim 1, a construction machine in accordance with claim 3 and a shift control method according to claim 6.

Preferably, the transmission may be shifted to the first stage and the second stage, and gradient resistance of the preset criterion gradient may be set to have a smaller value than driving force of the second stage of the transmission at a current speed of the construction machine.

Preferably, the construction machine includes a slope sensor provided to the construction machine, in which the controller may calculate the slope gradient by using an input value of the slope sensor.

Preferably, the sensor may include a speed sensor provided to an input shaft or an output shaft of the transmission, and the controller may calculate the slope gradient by using an input value of the speed sensor.

Preferably, a speed of the construction machine may be measured or calculated by the sensor, and the controller may calculate a torque of the construction machine based on the speed and calculate the slope gradient by using the speed and the torque.

Preferably, the construction machine may include a pressure sensor of the traveling motor, in which the controller may calculate the torque by using an input value of the pressure sensor and a swash plate angle input value of the traveling motor to calculate the slope gradient.

Preferably, the traveling motor may include a swash plate fixedly controlled at the first stage or the second stage, and the controller may predict a torque by using a swash plate angle input value of the traveling motor, an input value of a pressure of the hydraulic pump, and the number of rotations of the engine to calculate the slope gradient.

Preferably, the shift control method may include inactivating the uphill function with a gradient smaller than the preset criterion gradient (S150).

[Advantageous Effects]

According to the construction machine equipped with the automatic transmission apparatus of the present invention described above, since shifting is performed under shift conditions optimized for a situation in which shifting is increased or a shift shock and noise are periodically incurred, there is an effect in preventing components of the construction machine related to the shifting from being damaged.

Further, the number of sensors required for automatic transmission may be reduced as much as possible, and accordingly, the configuration of the controller may be simplified by minimizing the sensor input value that may be processed by the controller, so that there is an effect of reducing the manufacturing cost and design cost of the construction machine.

[Description of Drawings]

FIG. 1 is a cross-sectional view illustrating an automatic transmission apparatus of a construction machine to which an automatic shift method in the related art is applied.

FIG. 2 is a cross-sectional view illustrating an automatic transmission apparatus for a construction machine according to an exemplary embodiment of the present invention.

FIG. 3 is a diagram schematically illustrating a construction machine equipped with an automatic transmission apparatus according to the present invention.

FIG. 4 is a flowchart illustrating an automatic shift method for determining whether to perform an upshift of a construction machine according to the present invention.

FIG. 5 is a flowchart illustrating an automatic shift method for determining whether to perform a downshift of a construction machine according to the present invention.

FIG. 6 is a graph showing the maximum driving force of the first and second stages of a pump/motor according to a preset test report of a construction machine and the load on the slope at a -10% gradient.

FIG. 7 is a diagram illustrating an uphill function and a normal function according to an exemplary embodiment of the present invention.

[Best Mode]

For the full understanding of the present invention, an exemplary embodiment of the present invention will be described with reference to the accompanying drawings. The exemplary embodiment of the present invention may be modified in various forms, and the scope of the present invention should not be construed as being limited to the exemplary embodiment described in detail below. The present exemplary embodiment of the present invention is provided to fully explain the present invention to those skilled in the art. Therefore, the shape and the like of elements in the drawings may be exaggerated to emphasize a clearer description. It should be noted that in each drawing, the same member is shown with the same reference numerals in some cases. In addition, detailed descriptions of well-known functions and configurations determined to unnecessarily obscure the gist of the present invention will be omitted.

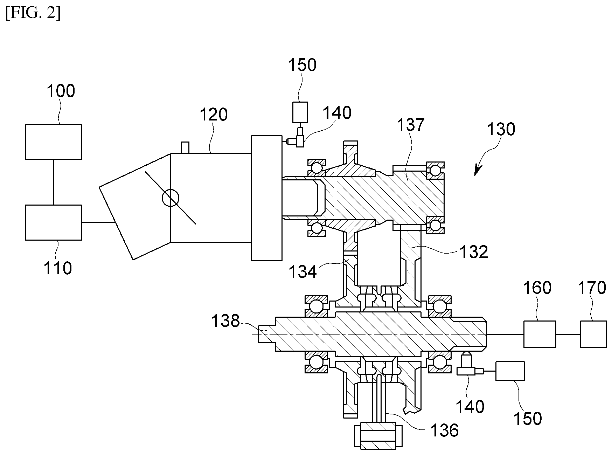

FIG. 2 is a cross-sectional view illustrating an automatic transmission apparatus for a construction machine according to an exemplary embodiment of the present invention.

Referring to FIG. 2, the construction machine equipped with the automatic transmission apparatus according to the present exemplary embodiment has an engine 100, a hydraulic pump 110, a traveling motor 120, a transmission 130, a controller 150 controlling an automatic shift of the transmission 130, an axle 160, and a wheel 170. In addition, the automatic transmission apparatus of the present invention includes the transmission 130 and the controller 150, and the controller 150 may include various sensors 140, which are to be described below, for controlling an automatic shift of the transmission 130. In addition, as an example, the construction machine may include a wheel excavator driven by a wheel.

The hydraulic pump 110 is connected to the engine 100 and receives driving force of the engine 100 to discharge hydraulic oil to the traveling motor 120. The hydraulic pump 110 is connected to the engine 100 and receives the driving force of the engine 100 to discharge the driving flow amount to the driving motor 120. That is, the engine 100 may generate driving force by combusting fuel and transmit the driving force to the hydraulic pump 110 through a power shaft of the engine 100. For example, the engine 100 may be a diesel engine, or the engine may be a liquefied natural gas (LNG) engine, a compressed natural gas (CNG) engine, an adsorption natural gas (ANG) engine, a liquefied petroleum gas (LPG) engine, or a gasoline engine.

In this case, the traveling motor 120 is driven by the hydraulic pressure of the hydraulic oil discharged to the hydraulic pump 110 to generate traveling power. The traveling motor 120 may be connected to the hydraulic pump 110 in both directions to rotate. The traveling motor 120 may be divided into an electronic traveling motor and a mechanical traveling motor. The electronic traveling motor is a variable capacity type whose volume is controlled by a capacity control valve, and refers to a motor that may be used and operated by electronically controlling the entire range from minimum to maximum, and the mechanical traveling motor is a traveling motor that may be operated by mechanically fixing the two minimum and maximum swash plate angles, and has the advantage in that it is cheaper than electronic traveling motor and the mechanical traveling motor is mainly applied to small construction machinery.

The transmission 130 may shift driving power to match the travelling speed of the wheel excavator, and an automatic shift of the transmission 130 may be implemented under the control of the controller 150. The transmission 130 may be connected to the traveling motor to perform the shift of two or more gear stages. The traveling power automatically shifted by the controller 150 is transmitted to the wheel 170 through the axle 160. In this way, the automatic shift of the transmission 130 by the controller 150 may be applied to other construction machines, such as a wheel loader, driven by wheels.

In addition, in the automatic transmission apparatus of the construction machine according to the present invention, the transmission 130 includes a first-stage gear 132, a second-stage gear 134 and a synchronizer 136 installed on the output shaft 138, the controller 150 includes the sensor 140 for detecting the pressure, speed, and the number of rotations of the traveling motor 120, and other states of the construction machine, whether the shift by the transmission 130 is automatically controlled based on sensing values, such as pressure and the number of rotations of the traveling motor 120 sensed by the sensor 140. The controller 150 may perform automatic shifting of the transmission 130 by using the detection value detected by the sensor 140. The controller 150 calculates a current slope gradient based on the detection value of the sensor 140 and compares the current slope gradient with a preset criterion gradient to control the uphill function that prevents the upshift to be activated. In this case, the controller 150 outputs a shift signal to the transmission 130, and the transmission 130 performs a shift operation according to the shift signal.

In addition, in the construction machine according to the present invention, the traveling motor is a driving motor that cannot control the swash plate, and the number of rotations is measured using a pressure speed sensor, and the torque of the traveling motor is predicted based on the measured number of rotations. Further, the number of rotations is measured by using the output speed sensor, and the vehicle speed is calculated based on the measured number of rotations. Accordingly, the acceleration is calculated to determine whether to perform the shift.

On the other hand, when the swash plate control of the driving motor is possible, the torque of the traveling motor is calculated by using the volume and pressure through the swash plate control of the traveling motor and the pressure sensor, and the number of rotations is measured by using the output speed sensor of the transmission and the vehicle speed is calculated based on the measured number of rotations. Therefore, since the acceleration is calculated to determine whether to shift, the calculation will be much simpler.

In this case, the synchronizer 136 may be connected to the input shaft 137 that receives traveling power from the traveling motor 120. Also, the synchronizer 136 may be selectively connected to the first-stage gear 132 and the second-stage gear 134 according to a user's manipulation or the control of the controller 150 according to the traveling speed. That is, when the synchronizer 136 meshes with the first-stage gear 132, the construction machine travels in the first stage, and when the synchronizer 136 meshes with the second-stage gear 134, the construction machine travels in the second stage that is faster than the first stage.

**EP 4 060 126 B1**

In the exemplary embodiment, the sensor 140 may include a speed sensor or a pressure sensor which is provided on one side of the traveling motor 120 so as to detect the traveling speed of the construction machine to detect the speed, the number of rotations, and pressure of the traveling motor 120. In this case, the speed sensor may be disposed on the input shaft or the output shaft of the transmission, as well as the traveling motor. In another embodiment, the sensor 140 may include a slope sensor (not illustrated) capable of detecting an angle of a current slope of the construction machine. The sensor 140 may be provided on one side of the traveling motor 120 to detect the speed and pressure of the traveling motor 120, but the present invention is not limited thereto, and the present invention may further include other sensors that are provided in the transmission 130 to provide information about the construction machine, such as detecting the traveling speed.

The controller 150 may synchronize the rotational speeds of the input shaft 137 and the output shaft 138 according to the speed of the traveling motor 120 detected by the sensor 140. That is, the rotation speed of the input shaft 137 and the rotation speed of the output shaft 138 may be synchronized by correcting the traveling power of the traveling motor 120. The controller 150 may include a transmission controller (TCU) that controls the operation of the transmission 130. For example, the controller 150 may make the rotational speed of the traveling motor 120 be equal to the actual traveling speed of the wheel excavator by adjusting the swash plate angle of the traveling motor 120 using a current value.

In this case, the transmission 130 may include at least one clutch and at least one decelerator. The clutch and the decelerator may be disposed as a gear train. It is possible to set the transmission ratio by using various arrangements of the clutch and the decelerator and gears of various diameters. In the present invention, the transmission 130 will be described as a configuration in which the first-stage shift or the second-stage shift is possible.

Meanwhile, the controller 150 blocks the hydraulic oil supplied from the hydraulic pump 110 to the traveling motor 120 when desiring to perform the shift of the transmission 130. Accordingly, the volume of the traveling motor 120 becomes 0 cc instantaneously. That is, the traveling motor 120 and the transmission 130 are switched to a no-load state by blocking the hydraulic oil, and the synchronizer 136 meshed with the first-stage gear 132 or the second-stage gear 134 moves to the neutral mode position.

In this neutral mode, the controller 150 may control the swash plate angle of the traveling motor 120 to correct traveling power generated from the traveling motor 120 to be the same as the actual traveling speed. Accordingly, the shift speed range may be set in the controller 150. When the rotation speeds of the input shaft 137 and the output shaft 138 are synchronized by the above-described operations, the controller 150 may transmit a shift signal to the synchronizer 136. The synchronizer 136 may be selectively meshed with the first-stage gear 132 or the second-stage gear 134 according to the shift signal.

In this case, it is possible to perform work and traveling in the second gear state without any problem in a general situation without any special shifting. However, there may be cases where it is not normal as follows. That is, in the case of a work site with a high slope where a construction machine is used, there may be a site where the high slope is continuously extended, so when the shift is forcefully performed in this situation, there is a problem in that the synchronizer 136 may be damaged.

In order to prevent this, a control to prevent shifting from the first gear to the second gear is required. In addition, when the number of shifting situations increases, shift shock caused by frequent shifting is generated, which needs to be reduced. That is, according to the present invention, in the construction machine equipped with the automatic transmission apparatus, the shift is performed through the shift condition optimized for the situation in which the foregoing shifting increases or the situation in which shift shock and noise are periodically incurred, so that there is an effect in preventing damage to components of the construction machine related to shifting.

In other words, in the case of wheel-driven construction machines, the transmission and decelerator specifications are determined according to the motor power (torque, rpm), the specifications of the transmission and the decelerator are decided depending on whether the torque is high and the speed is low, the speed is high and the torque is low, or the torque is high and the speed is also high, and the optimal specification needs be decided by considering all these situations.

In particular, in the construction machine equipped with the automatic transmission apparatus according to the present invention, the controller 150 is capable of determining the automatic shift of the transmission 130 by using only a pressure sensor 141 and the speed sensor 142 provided in the traveling motor 120, so that it is characterized in that it is possible to reduce the manufacturing cost of the construction machine by maximally reducing the number of sensors required for automatic transmission, and also to minimize the sensor input value that may be processed by the controller 150. In addition, the construction machine equipped with the automatic transmission apparatus according to the present invention is characterized in that it is possible to control the shift even when the traveling motor is capable of controlling the swash plate, as well as when the traveling motor is incapable of controlling the swash plate.

In addition, the controller 150 may include a normal function for performing a general automatic shift and an uphill function having a function for preventing upshift. In this case, the normal function means a general shift control that automatically performs shifting according to a preset shift pattern, and the uphill function of the present invention has a function of preventing the upshift as in the term. These functions will be described later.

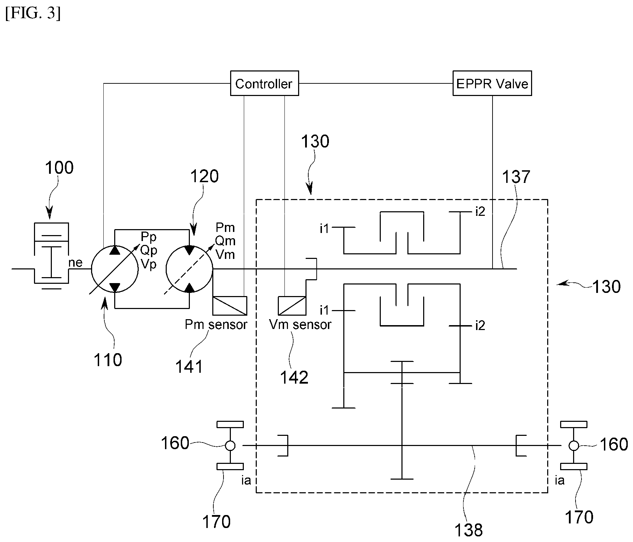

FIG. 3 is a diagram schematically illustrating a construction machine equipped with an automatic transmission apparatus according to the present invention.

As illustrated in FIG. 3, in the construction machine equipped with the automatic transmission apparatus according to the present invention, the sensor 140 includes the pressure sensor 141 for measuring the pressure of the traveling motor 120 and the speed sensor 142 for measuring the number of rotations of the traveling motor 120. In the exemplary embodiment, the sensor 140 may include a slope sensor (not illustrated) for measuring the angle of the current slope of the construction machine.

That is, in the construction machine equipped with the automatic transmission apparatus of the present invention, the controller 150 calculates the condition values required for shifting, such as an acceleration and a slope gradient, by using the pressure sensor 141 provided in the traveling motor 120 and the speed sensor 142 disposed in the traveling motor 120 or the transmission, and further, the controller 150 may prevent the upshift of the transmission 130 by activating the uphill function. On the other hand, when the slope sensor is provided, the controller 150 is capable of directly calculating the slope gradient through the input value of the slope sensor without the need to calculate the acceleration.

On the other hand, the number of rotations of the traveling motor 120 measured by the speed sensor 142 may be the same as the number of rotations of the input shaft 137 of the transmission 130, and an electronic proportional pressure reduce valve (EPPR valve) may be attached to the input shaft 137. In this case, when the EPPR valve is not attached to the input shaft 137, torque loss occurs because the excess torque must always be maintained regardless of the use of electrical components. Therefore, when the EPPR valve is used, the maximum torque of the hydraulic pump 110 is set higher than the maximum torque of the engine, and the load applied to the engine is monitored, and then when the load increases, the torque loss may be significantly reduced by reducing the maximum torque of the hydraulic pump 110. For example, the hydraulic pump 110 may receive an electronic control signal (current signal) transmitted from the controller 150 through the EPPR valve, and the discharge flow rate thereof may be adjusted.

Hereinafter, a method of determining whether to perform the upshift and the downshift of the automatic transmission apparatus provided in the construction machine according to the present invention will be described.

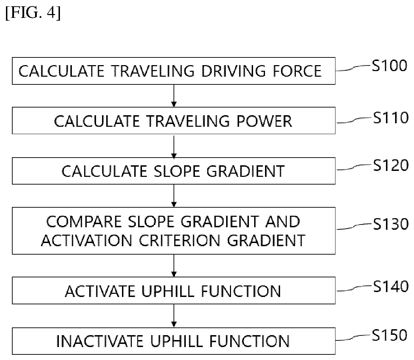

FIG. 4 is a flowchart illustrating a shift control method of the construction machine provided with the automatic transmission apparatus according to the present invention.

The shift control method of the construction machine provided with the automatic transmission apparatus of the present invention includes: in the construction machine mounted with the traveling motor 120 in which a swash plate control is impossible and the transmission 130 capable of performing an automatic shift, calculating traveling driving force F_drive of the construction machine (S100); calculating current travelling power F_current of the construction machine (S110): calculating a slope gradient in a current gear stage by using the calculated traveling driving force F_drive and the traveling power F_current (S120); comparing the calculated slope gradient with a criterion gradient that is an activation criterion of an uphill function (S130); and activating the uphill function (S140).

[Calculate traveling driving force (S100)]

First, in calculating of traveling driving force F_drive of the construction machine (S100), through [Equations 1, 2, 3] which are to be described below, after the predicted number of rotations (nm) [Equation 1] and a predicted torque (Tm) [Equation 2] of the traveling motor 120 are calculated, the traveling driving force F_drive may be calculated [Equation 3] based on the calculated predicted number of rotations and the predicted torque.

On the other hand, it may be assumed that the flow rate of the hydraulic pump 110 does not flow toward the working machine of the construction machine, and all the flow amounts of the hydraulic pump 110 are directed to the traveling motor 120 since the construction machine is travelling in the shifted situation.

Therefore, the hourly flow rate of the traveling motor 120 may be replaced with the hourly flow rate of the hydraulic pump 110 (Qm = Qp). In addition, the hourly flow rate (Qp) of the hydraulic pump 110 can be found by dividing the product of the volume (Vp, cc) of the hydraulic pump 110 and the number of rotations (np) of the hydraulic pump 110 by 1000, and herein, since the hydraulic pump 110 is directly connected to the engine 100, the number of rotations (np, RPM) of the hydraulic pump 110 is replaceable with the number of rotations (ne, RPM) of the engine 100.

Therefore, the volume (Vp, cc) and the number of rotations (np, RPM) of the hydraulic pump 110 become the hourly flow rate (Qp, LPM), so as shown in [Equation 1] below, the number of rotations (nm) of the traveling motor 120 may be known with the hourly flow rate (Qm) of the traveling motor 120 / the volume (Vm) of the motor.

[Equation 1] Predicted number of rotations (nm) of traveling motor

$$nm = \frac{Qp(\approx Vp \times ne)}{Vm}$$

Qp : Hourly flow rate of hydraulic pump

Vp : Volume of hydraulic pump
ne : Number of rotations of engine
Vm : Volume of traveling motor

In addition, the controller 150 calculates the predicted torque Tm of the traveling motor 120 through the volume Vm of the travel motor 120, the pressure Pp of the hydraulic pump 110, and the volumetric efficiency ηm of the travel motor 120 through [Equation 2] as follows.

[Equation 2] Predicted torque Tm of traveling motor

$$Tm = \frac{Vm \times Pp}{2\pi} \times \eta m$$

Vm : Volume of traveling motor
Pm : Pressure of traveling motor
ηm : Volumeric efficiency of traveling motor

In addition, as the flow amount does not flow toward the working machine of the construction machine due to the shifted situation during the traveling of the construction machine, the pressure Pm of the traveling motor may be replaced with the pressure Pp of the hydraulic pump 110. For example, as shown in Table 1 below, the predicted torque may be obtained through the predicted number of rotations of the traveling motor 120.

[Table 1]

| Number of rotations (nm) | 500 | 1000 | 1500 | 2000 | 2500 | 3000 | 3500 | 4000 |
|---|---|---|---|---|---|---|---|---|
| Torque (Tm) | 286 | 255 | 197 | 146 | 118 | 94 | 47 | 14 |

That is, in the exemplary embodiment, in the case of the construction machine that cannot control the swash plate, that is, when the traveling motor 120 includes a swash plate that is fixedly controlled in the first or second stage, the predicted torque may be calculated based on the input value of the swash plate angle, the pressure Pp value of the hydraulic pump 110, and the engine rotation speed ne.
However, in the case of the construction machine capable of controlling the swash plate, the predicted torque of the traveling motor 120 may be calculated by using the pressure value Pm input through the pressure sensor of the traveling motor and the input value of the swash plate angle of the traveling motor.
Finally, the controller 150 may calculate the traveling driving force F_drive according to the gear stage number by using the torque Tm of the traveling motor calculated by [Equation 2] and [Equation 3] below.

[Equation 3] Traveling driving force F_drive

$$F_{drive} = \frac{(Tm \times in \times \eta n \times ia \times \eta a)}{StaticLoadRadius}, (n = 1 \cdot 2)$$

Tm : Torque of traveling motor
in : Gear ratio of nth stage (first stage, second stage) of transmission
ηn : Gear efficiency of nth stage of transmission ia : Axle gear ratio
ηm : Volumeric efficiency of traveling motor
ηa : Gear efficiency of axle

In addition, by using [Equation 3], all of the current traveling driving force F_drive and traveling driving force upshifted by one level (F_drive+1 Upshift) or traveling driving force downshifted by one stage (F_drive-1 Downshift) may be obtained. For example, a stage upshifted by one stage from a specific gear stage means the second-stage gear upshifted by one stage when the gear of the current construction machine is in first stage.

[Calculate traveling power (S110)]

In obtaining the traveling power (S110), the traveling power F_current may be calculated as the sum of the force M*a and traveling resistance F_res required for the traveling, and the driving resistance F_res may include air resistance F_aero, rolling resistance F_rolling, and gradient resistance F_grade.

That is, the traveling power F_current may be expressed as [Equation 4] below.

[Equation 4] Traveling power F_current

$$F_{current} = M \times a + F_{aero} + F_{rolling} + F_{res} + F_{grade}$$

[Calculate slope gradient (S120)]

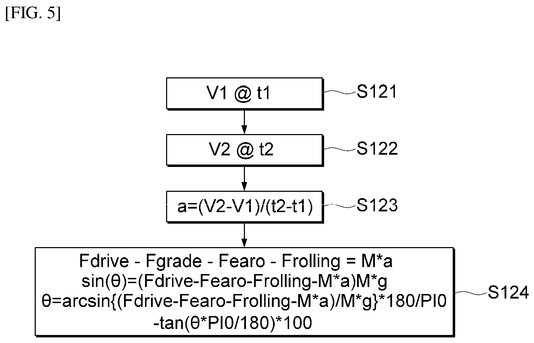

FIG. 5 is a flowchart illustrating the operation S120 of calculating the slope gradient according to the present invention.

As illustrated in FIG. 5, the calculating of the slope gradient (S120) includes: calculating, by the controller 150, a vehicle speed V1 at a specific time point t1 by using Equation 5 below (S121); calculating a vehicle speed V2 at a specific time point t2 after a predetermined time has elapsed from the specific time point t1 by using Equation 5 again (S122); calculating an acceleration a of the construction machine by using the vehicle speeds V1 and V2 and the time points t1 and t2 (S123); and calculating a slope gradient by using Equation 6 below (S124).

In this case, the controller 150 may calculate the vehicle speed V of the construction machine by using Equation 5 below.

[Equation 5] Vehicle speed V of construction machine

$$V = \frac{nm \times 2\pi \times DynamicLoadRadius \times 60}{in \times ia \times 1000}, (n = 1, 2)$$

nm : Predicted number of rotations of traveling motor
n : First-stage gear or second-stage gear
in : Gear ratio of $n^{th}$ stage (first stage, second stage) of transmission ia : Axle gear ratio

Meanwhile, in [Equation 5], the number of rotations (nm) of the traveling motor 120 may be replaced with the predicted number of rotations (nm) of the traveling motor predicted by [Equation 1].

In addition, the acceleration a calculated in operation S123 is multiplied by the weight M of the construction machine to obtain the force M*a required for the traveling of the construction machine, and the force M*a may be added to the traveling resistance F_res to obtain the traveling power F_current required for traveling as a whole. Meanwhile, as described above, the traveling resistance F_res may include air resistance F_aero, rolling resistance F_rolling, and gradient resistance F_grade.

In calculating the slope gradient (S124), the slope angle may be calculated by the calculation process according to following [Equation 6] under the premise that the current traveling driving force F_drive and the traveling power F_current are the same. Meanwhile, the gradient resistance F_grade may be replaced by M * g * sin(θ).

[Equation 6]

F_drive = F_current

F_drive = F_grade + F_aero - F_rolling + M * a

F_drive - M * g * sin(θ) - F_aero - F_rolling = M * a

sin(θ) = (F_drive - F_aero - F_rolling - M*a)/M*g

θ = arcsin{ ( F_drive - F_aero - F_rolling - M*a) / M*g}

Thereafter, the slope gradient is finally calculated through [Equation 7] using the slope angle.

[Equation 7] Calculate slope gradient

$$-\tan\left(\theta \times \frac{\pi}{180}\right) \times 100$$

The unit of the slope gradient is %, which is the degree of inclination displayed on a general road that is a value of (vertical movement distance/horizontal movement distance) x 100. For example, if the slope gradient is 10% (hereinafter referred to as 10 by omitting the unit), the angle is arctan(0.1), which yields 5.7 degrees. Also, if the slope gradient is +, it means downhill, and if it is -, it means uphill.

That is, in the present invention, the speed of the construction machine may be measured by the speed sensor or calculated by [Equation 5], and the controller may calculate the slope gradient through the speed and torque of the construction machine.

[Compare slope gradient and activation criterion gradient (S130)]

In performing the shift (S130), whether the uphill function is activated is determined (S140) by comparing the slope gradient (%) calculated in operation S120 and a preset criterion gradient (%).

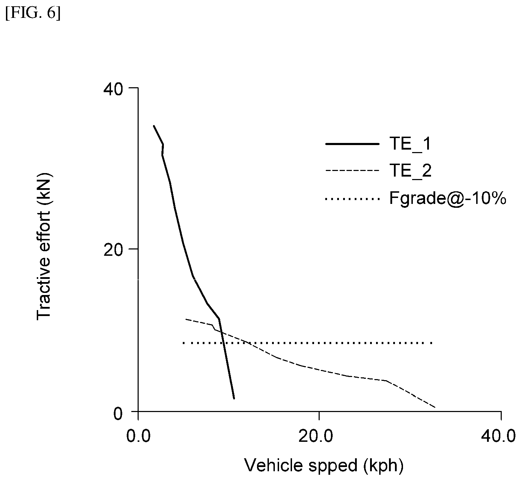

FIG. 6 is a graph illustrating the maximum driving force of the first and second stages of the pump/motor and the load on the slope at a -10% gradient according to the preset test report of the construction machine, and the solid line is the maximum driving force diagram in the first stage, the broken line is the maximum driving force diagram in the second stage, and the dotted line is the gradient load of -10%. On the other hand, as described above, -10% means an uphill slope, and the gradient load at -10% is shown in the vicinity of the intersection of the maximum driving force of the first and second stages in the graph.

In addition, the unit of the vertical axis is kN, which is a unit of driving force, and the maximum driving force of the first and second stages may be calculated through the foregoing traveling driving force F_drive and traveling driving force F_drive+1 Upshift upshifted by one stage or traveling driving force (F_drive-1 Downshift) downshifted by one stage. That is, the graph of FIG. 6 will be described based on the case where the shift is composed of first and second stages. In addition, the maximum driving force of the first and second stages is the value calculated from the torque of the traveling motor 120, and the motor cannot control the swash plate, and the torque of the traveling motor 120 is inferred from the state of the hydraulic pump 110.

In addition, as described above, the construction machine equipped with the automatic transmission apparatus according to the present invention may include an uphill function for controlling the shift. In this case, the normal function means a general shift control that automatically performs shifting according to a preset shift pattern, and the uphill function of the present invention has a function of preventing the upshift.

In most shifts, upshift or downshift transmission is performed at the point where the driving force diagrams of each stage intersect. As an example, referring to FIG. 6, when the shift is maintained in the second stage on an uphill slope having a gradient of -10%, the maximum driving force of the second stage is not higher than the slope load, so that even if the driver is fully pressing the driving pedal, the equipment may not accelerate or, in some cases, may even decelerate. Therefore, in the case of a -10% gradient, the shift may be maintained in the first stage or it is necessary to shift to the first stage in case of the second stage. In other words, it is necessary to prevent an upshift to a higher shift at a specific gradient, such as -10%. Therefore, in the construction machine having the driving force illustrated in FIG. 6, a specific gradient, such as -10%, may be used as the gradient of the activation criterion as a specific condition for determining the slope.

In the exemplary embodiment, the gradient of the activation criterion may be arbitrarily set according to the characteristics of the construction machine. In this case, the gradient of the arbitrarily set activation criterion may be determined by calculation through the test report of the pump/motor. In detail, the graph may be set near the point at which the first-stage driving force diagram meets the second-stage driving force diagram, or may be set at a lower side of the point at which the first-stage driving force diagram meets the second-stage driving force diagram. In the exemplary embodiment, the gradient of the preset activation criterion, that is, the gradient resistance of the criterion gradient, may be set to have a value smaller than the driving force of the second gear of the transmission at the current speed of the construction machine. In the case of FIG. 6, the solid line represents the driving force diagram of the first stage of the construction machine, and the broken line indicates the driving force diagram of the second stage, and in this case, compared to the gradient resistance F_grade at -10%, the driving force diagram of the second stage is mostly located on the lower side.

[Activate uphill function (S140)]

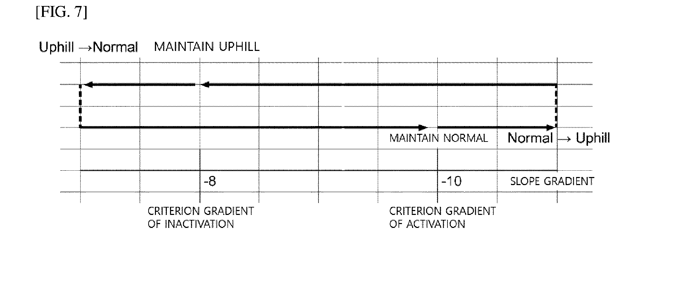

FIG. 7 is a diagram illustrating the uphill function and the normal function according to the exemplary embodiment of the present invention.

Based on FIG. 7, 7, in activating the uphill function (S140), the activation criterion gradient will be described as -10%, which does not limit the present invention. The slope gradient calculated by [Equation 6] is compared with the gradient of the activation criterion, and when the calculated slope gradient is greater than the gradient of the activation criterion, the uphill function may be activated and accordingly an upshift may be prevented. For example, when the slope gradient value calculated by the above-described method is -11% that is lower than the preset criterion gradient value of -10%, the '-' sign means an uphill slope, so that the degree of inclination of the current uphill slope is greater than the reference value, thereby preventing the automatic upshift of the transmission.

[Inactivate uphill function (S150)]

Meanwhile, according to various exemplary embodiments of the present invention, when the calculated slope gradient is smaller than the preset inactivation criterion gradient, the uphill function may be deactivated again.
In the exemplary embodiment, as illustrated in FIG. 7, the gradient of the inactivation criterion may be used by -8%, and when the calculated slope gradient is -7% that is higher than the gradient of the inactivation criterion of -8% in a state where the uphill function is maintained, the uphill function may be released again to be converted into the normal function.
That is, the present invention does not determine whether to shift by comparing the driving force, but may determine whether to shift by the method of calculating the slope gradient and comparing the calculated slope gradient with the activation criterion gradient. In addition, in the present invention, the inclination angle of the traveling road is not measured, but the slope gradient may be obtained by calculation in real time.
The exemplary embodiment of the construction machine equipped with the automatic transmission apparatus of the present invention described above is merely illustrative, and those skilled in the art to which the present invention pertains will appreciate that various modifications and equivalent other embodiments are possible therefrom. Therefore, it will be well understood that the present invention is not limited to the form mentioned in the above detailed description. Therefore, the true technical scope of the present invention should be determined by the appended claims.

[Description of Reference Numerals]

| | | | |
|---|---|---|---|
| 100 : | Engine | 110: | Hydraulic pump |
| 120 : | Traveling motor | 130 : | Transmission |
| 132: | First-stage gear | 134 : | Second-stage gear |
| 136 : | Synchronizer | 137 : | Input shaft |
| 138 : | Output shaft | 140 : | Sensor |
| 141 : | Pressure sensor | 142 : | Speed sensor |
| 150 : | Controller | 160 : | Axle |
| 170 : | Wheel | | |

**Claims**

**1.**   A construction machine equipped with an automatic transmission apparatus, the construction machine comprising:

a hydraulic pump (110) connected with an engine (100) to discharge a driving flow amount;
a traveling motor (120) connected with the hydraulic pump (110) in both directions to rotate;
a sensor (140) configured to detect a speed of a vehicle; and
a transmission (130) connected with the traveling motor (120) to perform a shift of two or more stages;
the construction machine being **characterized in that** it further comprises:

a controller (150) configured to compare a current slope gradient and a preset criterion gradient to activate an uphill function that prevents upshift, and
a slope sensor provided to the construction machine,
wherein the controller (150) is configured to obtain the current slope gradient by using an input value of the slope sensor.

**2.**   The construction machine of claim 1, wherein the transmission (130) is shifted to the first stage and the second stage, and
gradient resistance of the preset criterion gradient is set to have a smaller value than driving force of the second stage of the transmission (130) at a current speed of the construction machine.

3. A construction machine equipped with an automatic transmission apparatus, the construction machine comprising:

a hydraulic pump (110) connected with an engine (100) to discharge a driving flow amount;
a traveling motor (120) connected with the hydraulic pump (110) in both directions to rotate;
a sensor (140) configured to detect a speed of a vehicle; and
a transmission (130) connected with the traveling motor (120) to perform a shift of two or more stages;
the construction machine being **characterized in that** it further comprises:

a controller (150) configured to compare a current slope gradient and a preset criterion gradient to activate an uphill function that prevents upshift,
wherein a speed of the construction machine is measured or calculated by the sensor (140), and
wherein the controller (150) is configured to calculate a torque of the construction machine based on the speed and calculates the slope gradient by using the speed and the torque.

4. The construction machine of claim 3, comprising:

a pressure sensor of the traveling motor (120),
wherein the controller (150) calculates the torque by using an input value of the pressure sensor and a swash plate angle input value of the traveling motor to calculate the slope gradient.

5. The construction machine of claim 3, wherein the traveling motor (120) includes a swash plate fixedly controlled at the first stage or the second stage, and
the controller (150) predicts a torque by using a swash plate angle input value of the traveling motor, an input value of a pressure of the hydraulic pump, and the number of rotations of the engine to calculate the slope gradient.

6. A shift control method of a contruction machine equipped with an automatic transmission apparatus, the shift control method comprising:

calculating traveling driving force of a construction machine;
obtaining a speed of the construction machine;
calculating a current slope gradient by using the calculated traveling driving force and the speed;
comparing the calculated slope gradient with a preset criterion gradient; and
activating an uphill function that prevents an upshift when the calculated slope gradient is larger than the preset criterion gradient.

7. The shift control method of claim 6, comprising:
inactivating the uphill function with a gradient smaller than the preset criterion gradient.


**Patentansprüche**

1. Baumaschine, die mit einer Automatikgetriebevorrichtung ausgestattet ist, wobei die Baumaschine umfasst:

eine Hydraulikpumpe (110), die mit einem Verbrennungsmotor (100) verbunden ist, um eine Antriebsflussmenge abzugeben;
einen Fahrmotor (120), der in beiden Richtungen mit der Hydraulikpumpe (110) verbunden ist, um sich zu drehen;
einen Sensor (140), der dazu eingerichtet ist, eine Geschwindigkeit eines Fahrzeugs zu detektieren; und
ein Getriebe (130), das mit dem Fahrmotor (120) verbunden ist, um eine Schaltung von zwei oder mehr Stufen durchzuführen;
wobei die Baumaschine **dadurch gekennzeichnet ist, dass** sie des Weiteren umfasst:

eine Steuerung (150), die dazu eingerichtet ist, einen momentanen Steigungsgradienten und einen voreingestellten Kriteriumgradienten zu vergleichen, um eine Bergauffahrfunktion zu aktivieren, die ein Hochschalten verhindert, und

einen Steigungssensor, der an der Baumaschine bereitgestellt ist,
wobei die Steuerung (150) dazu eingerichtet ist, den momentanen Steigungsgradienten unter Verwendung eines Eingabewertes des Steigungssensors zu erhalten.

2. Baumaschine nach Anspruch 1, wobei das Getriebe (130) in die erste Stufe und die zweite Stufe geschaltet wird, und der Gradientenwiderstand des voreingestellten Kriteriumgradienten so eingestellt wird, dass er bei einer momentanen Geschwindigkeit der Baumaschine einen kleineren Wert hat als die Antriebskraft der zweiten Stufe des Getriebes (130).

3. Baumaschine, ausgestattet mit einer Automatikgetriebevorrichtung, wobei die Baumaschine umfasst:

eine Hydraulikpumpe (110), die mit einem Verbrennungsmotor (100) verbunden ist, um eine Antriebsflussmenge abzugeben;
einen Fahrmotor (120), der in beiden Richtungen mit der Hydraulikpumpe (110) verbunden ist, um sich zu drehen;
einen Sensor (140), der dazu eingerichtet ist, eine Geschwindigkeit eines Fahrzeugs zu detektieren; und
ein Getriebe (130), das mit dem Fahrmotor (120) verbunden ist, um eine Schaltung von zwei oder mehr Stufen durchzuführen;
wobei die Baumaschine **dadurch gekennzeichnet ist, dass** sie des Weiteren umfasst:

eine Steuerung (150), die dazu eingerichtet ist, einen momentanen Steigungsgradienten und einen voreingestellten Kriteriumgradienten zu vergleichen, um eine Bergauffahrfunktion zu aktivieren, die ein Hochschalten verhindert,
wobei eine Geschwindigkeit der Baumaschine durch den Sensor (140) gemessen oder berechnet wird, und
wobei die Steuerung (150) dazu eingerichtet ist, ein Drehmoment der Baumaschine auf der Grundlage der Geschwindigkeit zu berechnen, und den Steigungsgradienten unter Verwendung der Geschwindigkeit und des Drehmoments berechnet.

4. Baumaschine nach Anspruch 3, umfassend:

einen Drucksensor des Fahrmotors (120),
wobei die Steuerung (150) das Drehmoment unter Verwendung eines Eingabewertes des Drucksensors und eines Taumelscheibenwinkel-Eingabewertes des Fahrmotors berechnet, um den Steigungsgradienten zu berechnen.

5. Baumaschine nach Anspruch 3, wobei der Fahrmotor (120) eine Taumelscheibe umfasst, die in der ersten Stufe oder der zweiten Stufe fest gesteuert wird, und
die Steuerung (150) ein Drehmoment unter Verwendung eines Taumelscheibenwinkel-Eingabewertes des Fahrmotors, eines Eingabewertes eines Drucks der Hydraulikpumpe und der Anzahl von Umdrehungen des Verbrennungsmotors vorhersagt, um den Steigungsgradienten zu berechnen.

6. Schaltsteuerungsverfahren für eine Baumaschine, die mit einer Automatikgetriebevorrichtung ausgestattet ist, wobei das Schaltsteuerungsverfahren umfasst:

Berechnen einer Fahrantriebskraft einer Baumaschine;
Erhalten einer Geschwindigkeit der Baumaschine;
Berechnen eines momentanen Steigungsgradienten unter Verwendung der berechneten Fahrantriebskraft und der Geschwindigkeit;
Vergleichen des berechneten Steigungsgradienten mit einem voreingestellten Kriteriumgradienten; und
Aktivieren einer Bergauffahrfunktion, die ein Hochschalten verhindert, wenn der berechnete Steigungsgradient größer ist als der voreingestellte Kriteriumgradient.

7. Schaltsteuerungsverfahren nach Anspruch 6, umfassend:
Deaktivieren der Bergauffahrfunktion bei einem Gradienten, der kleiner ist als der voreingestellte Kriteriumgradient.

**Revendications**

1. Engin de chantier équipé d'un dispositif de transmission automatique, l'engin de chantier comprenant :

une pompe hydraulique (110) reliée à un moteur (100) pour refouler un débit d'entraînement ;
un moteur de déplacement (120) relié à la pompe hydraulique (110) dans les deux sens de manière à tourner ;
un capteur (140) configuré pour détecter une vitesse d'un véhicule ; et
une transmission (130) reliée au moteur de déplacement (120) pour effectuer un changement de deux étages ou plus ;
l'engin de chantier étant **caractérisé en ce qu'**il comprend en outre :

une commande (150) configurée pour comparer un gradient de pente actuel et un gradient de critère prédéfini pour activer une fonction de montée qui empêche un passage à un rapport supérieur, et
un capteur de pente prévu sur l'engin de chantier,
la commande (150) est configurée pour obtenir le gradient de pente actuel à l'aide d'une valeur d'entrée du capteur de pente.

2.  Engin de chantier selon la revendication 1, dans lequel la transmission (130) est passée au premier étage et au second étage, et
une résistance de gradient du gradient de critère prédéfini est réglée de manière à avoir une valeur inférieure à une force d'entraînement du second étage de la transmission (130) à une vitesse actuelle de l'engin de chantier.

3.  Engin de chantier équipé d'un dispositif de transmission automatique, l'engin de chantier comprenant :

une pompe hydraulique (110) reliée à un moteur à combustion interne (100) pour refouler un débit d'entraînement ;
un moteur de déplacement (120) relié à la pompe hydraulique (110) dans les deux sens de manière à tourner ;
un capteur (140) configuré pour détecter une vitesse d'un véhicule ; et
une transmission (130) reliée au moteur de déplacement (120) pour effectuer un changement de deux étages ou plus ;
l'engin de chantier étant **caractérisé en ce qu'**il comprend en outre :

une commande (150) configurée pour comparer un gradient de pente actuel et un gradient de critère prédéfini pour activer une fonction de montée qui empêche un passage à un rapport supérieur,
dans lequel une vitesse de l'engin de chantier est mesurée ou calculée par le capteur (140), et
dans lequel la commande (150) est configurée pour calculer un couple de l'engin de chantier sur la base de la vitesse et calcule le gradient de pente à l'aide de la vitesse et du couple.

4.  Engin de chantier selon la revendication 3, comprenant :

un capteur de pression du moteur de déplacement (120),
dans lequel la commande (150) calcule le couple à l'aide d'une valeur d'entrée du capteur de pression et d'une valeur d'entrée d'angle de plateau oscillant du moteur de déplacement pour calculer le gradient de pente.

5.  Engin de chantier selon la revendication 3, dans lequel le moteur de déplacement (120) comporte un plateau oscillant commandé de manière fixe au premier étage ou au second étage, et
la commande (150) prédit un couple à l'aide d'une valeur d'entrée d'angle de plateau oscillant du moteur de déplacement, d'une valeur d'entrée d'une pression de la pompe hydraulique, et du nombre de tours du moteur pour calculer le gradient de pente.

6.  Procédé de commande de changement de vitesse d'un engin de chantier équipé d'un dispositif de transmission automatique, le procédé de commande de changement de vitesse comprenant de :

calculer une force d'entraînement en déplacement d'un engin de chantier ;
obtenir une vitesse de l'engin de chantier ;
calculer un gradient de pente actuel à l'aide de la force d'entraînement en déplacement calculée et de la vitesse ;
comparer le gradient de pente calculé avec un gradient de critère prédéfini ; et
activer une fonction de montée qui empêche un passage à un rapport supérieur lorsque le gradient de pente calculé est supérieur au gradient de critère prédéfini.

7.  Procédé de commande de changement de vitesse selon la revendication 6, comprenant de : désactiver la fonction de montée avec un gradient inférieur au gradient de critère prédéfini.

[FIG. 1]

[FIG. 2]

[FIG. 3]

[FIG. 4]

| CALCULATE TRAVELING DRIVING FORCE | —S100 |
| CALCULATE TRAVELING POWER | —S110 |
| CALCULATE SLOPE GRADIENT | —S120 |
| COMPARE SLOPE GRADIENT AND ACTIVATION CRITERION GRADIENT | —S130 |
| ACTIVATE UPHILL FUNCTION | —S140 |
| INACTIVATE UPHILL FUNCTION | —S150 |

[FIG. 5]

```
┌─────────────────────┐
│      V1 @ t1        │──── S121
└─────────────────────┘
          │
          ▼
┌─────────────────────┐
│      V2 @ t2        │──── S122
└─────────────────────┘
          │
          ▼
┌─────────────────────┐
│  a=(V2-V1)/(t2-t1)  │──── S123
└─────────────────────┘
          │
          ▼
┌──────────────────────────────────────────────┐
│   Fdrive - Fgrade - Fearo - Frolling = M*a   │
│   sin(θ)=(Fdrive-Fearo-Frolling-M*a)M*g      │──── S124
│ θ=arcsin{(Fdrive-Fearo-Frolling-M*a)/M*g}*180/PI0 │
│            -tan(θ*PI0/180)*100               │
└──────────────────────────────────────────────┘
```

[FIG. 6]

[FIG. 7]

Uphill →Normal    MAINTAIN UPHILL

MAINTAIN NORMAL    Normal → Uphill

-8

-10    SLOPE GRADIENT

CRITERION GRADIENT
OF INACTIVATION

CRITERION GRADIENT
OF ACTIVATION

**EP 4 060 126 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160086043